# EUROPEAN PATENT SPECIFICATION

(11) **EP 4 212 360 B1**
(45) Date of publication and mention of the grant of the patent: **01.01.2025**
(21) Application number: 22207811.5
(22) Date of filing: 16.11.2022
(51) Int. Cl.: B60C 11/03, B60C 11/11, B60C 11/12

(54) **MOTORCYCLE TIRE**
MOTORRADREIFEN
PNEU DE MOTOCYCLETTE

(30) Priority: 12.01.2022 JP 2022003235
(43) Date of publication of application: 19.07.2023
(73) Proprietor: Sumitomo Rubber Industries, Ltd., Kobe-shi, Hyogo 651-0072 (JP)
(72) Inventor: NOGUCHI, Yoshihisa, Kobe-shi, 651-0071 (JP)
(74) Representative: Manitz Finsterwald Patent- und Rechtsanwaltspartnerschaft mbB

(56) References cited:
- JP-A- 2001 071 711
- JP-A- 2006 076 520
- US-A- 5 318 086
- US-B2- 10 464 375
- US-B2- 9 937 755

## Description

### BACKGROUND OF THE INVENTION

### Field of the Invention

The present invention relates to a motorcycle tire.

### Background Art

For example, Japanese Laid-Open Patent Publication No. H02-128908 discloses a motorcycle tire that includes central blocks, first lateral blocks, and second lateral blocks, and that is suitable for both running on rough terrain and running on paved road surfaces. In the motorcycle tire, a ratio between a length in the tire circumferential direction and a length in the tire axial direction for each of the central block, the first lateral block, and the second lateral block, a ratio between a sea area and a land area, and the like are specified. Such a motorcycle tire is considered to enhance traction performance without increasing a noise level.

A motorcycle tire in accordance with the preamble of claim 1 is known from JP 2001 071711 A. Related tires are described in US 9 937 755 B2, JP 2006 076520 A, US 5 318 086 A and US 10 464 375 B2.

In recent years, since quietness has been improved in a vehicle power unit, noise (tire noise) generated in the tire while the vehicle is running has also been required to be further reduced.

The present invention has been made in view of the aforementioned circumstances, and a main object of the present invention is to provide a motorcycle tire that allows tire noise to be further reduced.

### SUMMARY OF THE INVENTION

The object is solved by a motorcycle tire having the features of claim 1. Subclaims are directed to preferable embodiments of the invention.

The present invention is directed to a motorcycle tire including a tread portion. The tread portion has, on a tire equator, a crown block array in which a plurality of crown blocks are aligned in a tire circumferential direction. Distances in the tire circumferential direction over which the crown blocks adjacent to each other in the tire circumferential direction are distant from each other include a first distance and a second distance different from the first distance. A centroid of a tread surface of each of the plurality of crown blocks is positioned so as to be distant from the tire equator over a certain distance in a tire axial direction.

The motorcycle tire of the present invention has the above-described configuration, and, therefore, can further reduce tire noise.

According to an embodiment of the invention, the distance between the tire equator and the centroid of each crown block is 1.0 to 15.0 mm.

According to an embodiment of the invention, the tread portion includes a first tread end and a second tread end, and the crown blocks include a plurality of first crown blocks each having the centroid disposed on the first tread end side relative to the tire equator, and a plurality of second crown blocks each having the centroid disposed on the second tread end side relative to the tire equator.

According to an embodiment of the invention, the first crown blocks and the second crown blocks alternate in the tire circumferential direction.

According to an embodiment of the invention, the tread portion includes a pair of middle block arrays each of which is disposed outward of the crown blocks in the tire axial direction and has a plurality of middle blocks aligned in the tire circumferential direction, and includes a pair of shoulder block arrays each of which is disposed outward of the middle blocks in the tire axial direction and has a plurality of shoulder blocks aligned in the tire circumferential direction, and a centroid of a tread surface of each of the plurality of middle blocks and a centroid of a tread surface of each of the plurality of shoulder blocks are each distanced from the centroid of the tread surface of a corresponding one of the plurality of crown blocks by a distance in the tire circumferential direction.

According to an embodiment of the invention, the distance in the tire circumferential direction between the centroid of the tread surface of each of the plurality of middle blocks and the centroid of the tread surface of a corresponding one of the plurality of crown blocks is 5.0 to 15.0 mm.

According to an embodiment of the invention, the distance in the tire circumferential direction between the centroid of the tread surface of each of the plurality of shoulder blocks and the centroid of the tread surface of a corresponding one of the plurality of crown blocks is 5.0 to 15.0 mm.

According to an embodiment of the invention, the tread portion has a designated tire rotation direction, the plurality of crown blocks each include a crown toe-side edge disposed on a toe side in the tire rotation direction, and the crown toe-side edge is inclined relative to the tire axial direction.

According to an embodiment of the invention, an angle of the crown toe-side edge relative to the tire axial direction is 10 to 45°.

According to an embodiment of the invention, the crown toe-side edge extends from a first outer end to a second outer end in the tire axial direction so as to be V-shaped, the crown toe-side edge includes a first edge portion that linearly extends from the first outer end toward the tire equator, and a second edge portion that linearly extends from the second outer end toward the tire equator, and the first edge portion and the second edge portion connect to each other at a position distant from the tire equator by a distance in the tire axial direction.

According to an embodiment of the invention, the tread portion includes a pair of middle block arrays each of which is disposed outward of the crown blocks in the tire axial direction and has a plurality of middle blocks aligned in the tire circumferential direction, and includes a pair of shoulder block arrays each of which is disposed outward of the middle blocks in the tire axial direction and has a plurality of shoulder blocks aligned in the tire circumferential direction, each of the plurality of middle blocks and each of the plurality of shoulder blocks include a middle toe-side edge and a shoulder toe-side edge, respectively, disposed on a toe side in the tire rotation direction, the first edge portion or the second edge portion, and the shoulder toe-side edge are positioned on a first imaginary straight line, and the middle toe-side edge is disposed closer to a heel side in tire rotation direction than the first imaginary straight line is.

According to an embodiment of the invention, the plurality of crown blocks each have a crown sipe extending in the tire axial direction, and a depth of the crown sipe is 30% to 70% of a block height of each crown block.

According to an embodiment of the invention, a length of the crown sipe in the tire axial direction is 5% to 20% of a maximum length of each crown block in the tire axial direction.

### BRIEF DESCRIPTION OF THE DRAWINGS

FIG. 1 is a development of a tread portion of a motorcycle tire according to one embodiment of the present invention;
FIG. 2 is an enlarged view of FIG. 1;
FIG. 3 is a cross-sectional view taken along a line A-A in FIG. 2;
FIG. 4 is an enlarged view of FIG. 1; and
FIG. 5 is an enlarged view of FIG. 1.

### DETAILED DESCRIPTION

One embodiment of the present invention will be described below with reference to the drawings.

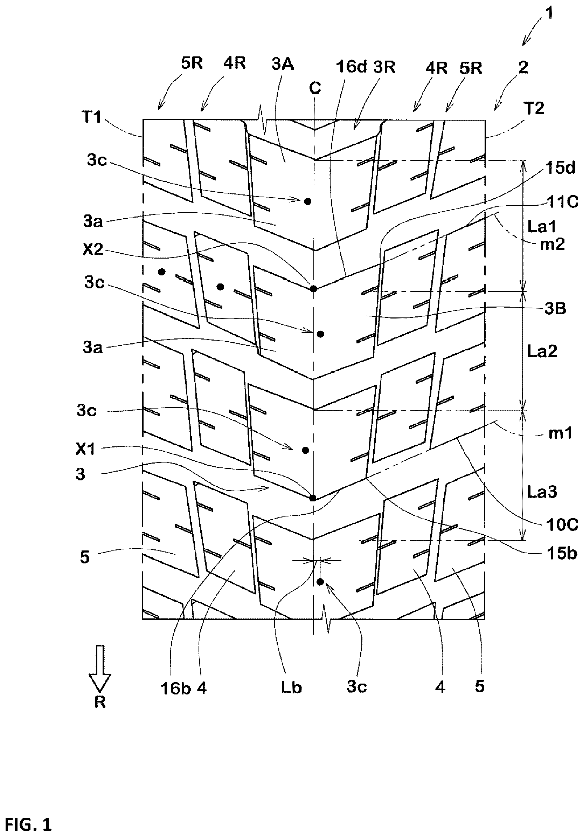

FIG. 1 is a development of a tread portion 2 of a motorcycle tire 1 (hereinafter, may be simply referred to as a "tire") according to one embodiment of the present invention. The tire 1 of the present embodiment of the invention is suitable for, for example, running on a course in which an on-road course and an off-road course are mixed. The tire 1 of the present embodiment of the invention is preferably used for, for example, both a front wheel and a rear wheel of a motorcycle.

In the present embodiment of the invention, the tread portion 2 has, on a tire equator C, a crown block array 3R in which a plurality of crown blocks 3 are aligned in the tire circumferential direction. Distances over which the crown blocks 3 and 3 adjacent to each other in the tire circumferential direction are distant from each other in the tire circumferential direction include a first distance La1 and a second distance La2 different from the first distance La1. Thus, a time interval of air compression/release generated between the crown blocks 3 and 3 when the tire rolls, varies, and concentration of noise in a specific frequency range is inhibited. Therefore, a tire noise level during running is reduced. In the present embodiment of the invention, the above-described distances include three kinds of distances that are the first distance La1, the second distance La2, and a third distance La3 different from each of the first and the second distances La1 and La2. Thus, the above-described effect is more effectively exhibited. In the present invention, the tire 1 may include four kinds of distances that are the first distance La1, the second distance La2, the third distance La3, and a fourth distance (not shown) different from each of the first, the second, and the third distances La1, La2, and La3.

A centroid 3c of a tread surface 3a of each of the plurality of crown blocks 3 is positioned so as to be distant from the tire equator C over a distance Lb in the tire axial direction. Thus, noise generated when air is compressed/released between the crown blocks 3 and 3 is different between both sides of the tire equator C in the crown block 3. By combining this difference with variation of the time interval, concentration of noise in a specific frequency range is further inhibited. As described above, the tire 1 of the present embodiment of the invention allows tire noise to be further reduced.

If the distance Lb is excessively great, running balance during straight running is degraded, and rough terrain running-through performance may be degraded. Therefore, the distance Lb is preferably not less than 1.0 mm and more preferably not less than 2.0 mm, and preferably not greater than 15.0 mm and more preferably not greater than 10.0 mm.

The tread portion 2 has, for example, a directional pattern in which the tire rotation direction R is designated. However, the tire 1 of the present invention is not limited to a tire having a designated tire rotation direction.

In the present embodiment of the invention, the tread portion 2 includes a pair of middle block arrays 4R and a pair of shoulder block arrays 5R. The pair of middle block arrays 4R are disposed on both outer sides of the crown block 3 in the tire axial direction. Each middle block array 4R has a plurality of middle blocks 4 aligned in the tire circumferential direction. The pair of shoulder block arrays 5R are disposed outward of the middle blocks 4 in the tire axial direction. Each shoulder block array 5R has a plurality of shoulder blocks 5 aligned in the tire circumferential direction.

The tread portion 2 includes a first tread end T1 (left side in the drawings) and a second tread end T2. The crown blocks 3 include a plurality of first crown blocks 3A each having the centroid 3c disposed on the first tread end T1 side relative to the tire equator C, and a plurality of second crown blocks 3B each having the centroid 3c disposed on the second tread end T2 side relative to the tire equator C.

The first crown blocks 3A and the second crown blocks 3B alternate in the tire circumferential direction. Thus, noise generated when air is compressed/released between the crown blocks 3 and 3 repeatedly flows alternately toward the first tread end T1 and the second tread end T2, and is reduced, so that concentration of noise in a specific frequency range is further inhibited.

The first tread end T1 and the second tread end T2 correspond to both ends in the tire axial direction in the normal state of the tire 1. The "normal state" represents a state in which the tire 1 is mounted on a normal rim (not shown) and is inflated to a normal internal pressure, and no load is applied. In the description herein, unless otherwise specified, dimensions of components of the tire 1 are represented as values measured in the normal state.

The "normal rim" represents a rim that is defined in a standard system including a standard on which the tire is based, by the standard, for each tire, and is, for example, the "standard rim" in the JATMA standard, the "Design Rim" in the TRA standard, or the "Measuring Rim" in the ETRTO standard.

The "normal internal pressure" represents an air pressure that is defined in a standard system including a standard on which the tire is based, by the standard, for each tire, and is the "maximum air pressure" in the JATMA standard, the maximum value recited in the table "TIRE LOAD LIMITS AT VARIOUS COLD INFLATION PRESSURES" in the TRA standard, or the "INFLATION PRESSURE" in the ETRTO standard.

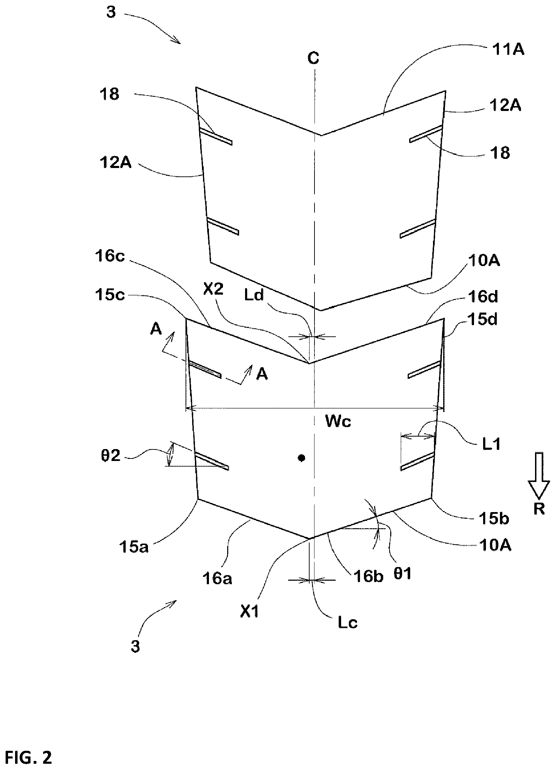

FIG. 2 is an enlarged view of FIG. 1. As shown in FIG. 2, the plurality of the crown blocks 3 each include, for example, a crown toe-side edge 10A disposed on a toe side in the tire rotation direction R. In the present embodiment of the invention, each of the crown blocks 3 includes a crown heel-side edge 11A disposed on a heel side in the tire rotation direction R, and a pair of crown lateral edges 12A connecting between both ends of the crown toe-side edge 10A and both ends of the crown heel-side edge 11A.

The crown toe-side edge 10A is, for example, inclined relative to the tire axial direction. Thus, the entirety of the crown toe-side edge 10A is inhibited from simultaneously coming into contact with a road surface when the crown block 3 comes into contact with the ground, so that impact sound becomes low to further reduce tire noise.

If an angle θ1 of the crown toe-side edge 10A relative to the tire axial direction is excessively great, traction by the crown toe-side edge 10A may be reduced. Therefore, the angle θ1 of the crown toe-side edge 10A is preferably not less than 10° and more preferably not less than 20°, and preferably not greater than 45° and more preferably not greater than 35°.

The crown toe-side edge 10A extends from a first outer end 15a (left side in the drawings) to a second outer end 15b (right side in the drawings) in the tire axial direction so as to be V-shaped. The crown toe-side edge 10A includes a first edge portion 16a that linearly extends from the first outer end 15a toward the tire equator C, and a second edge portion 16b that linearly extends from the second outer end 15b toward the tire equator C. The term "linearly" implies a straight line, and a curved line formed of a single arc in which a curvature radius is not less than 200 mm.

The first edge portion 16a and the second edge portion 16b connect to each other at a position (first connection position) X1 distant from the tire equator C over a distance Lc in the tire axial direction. Thus, concentration of noise in a specific frequency range can be further inhibited. In order to exhibit such an effect, the distance Lc in the tire axial direction between the first connection position X1 and the tire equator C is preferably not less than 1% of a maximum width Wc of the crown block 3 in the tire axial direction and more preferably not less than 2% thereof, and preferably not greater than 5% thereof and more preferably not greater than 4% thereof.

The crown heel-side edge 11A extends from a third outer end 15c (left side in the drawings) to a fourth outer end 15d in the tire axial direction so as to be V-shaped. The crown heel-side edge 11A includes a third edge portion 16c that linearly extends from the third outer end 15c toward the tire equator C, and a fourth edge portion 16d that linearly extends from the fourth outer end 15d toward the tire equator C. In the present embodiment of the invention, the third edge portion 16c and the fourth edge portion 16d are inclined relative to the tire axial direction.

For example, the third edge portion 16c and the fourth edge portion 16d connect to each other at a position (second connection position) X2 distant from the tire equator C over a distance Ld in the tire axial direction. The second connection position X2 is positioned on the same side as the first connection position X1 relative to the tire equator C in the tire axial direction. The distance Ld is preferably equal to the distance Lc.

In the present embodiment of the invention, each crown lateral edge 12A linearly extends. For example, each crown lateral edge 12A extends outward in the tire axial direction toward the heel side in the tire rotation direction R.

The plurality of the crown blocks 3 each have a crown sipe 18 extending in the tire axial direction. The crown sipe 18 contributes to proper reduction of stiffness of the crown block 3, and reduction of impact sound during contact with a road surface. In the description herein, sipes including a middle sipe 20 and a shoulder sipe 22 described below each represent a cut recess having a width of not greater than 1.5 mm, and are clearly distinguished from a groove in which a width for demarcating each block is not less than 1.5 mm.

The crown sipe 18 is formed as a semi-open sipe that extends from the crown lateral edge 12A and terminates in the tread surface 3a of the crown block 3 without reaching the tire equator C. Therefore, reduction of stiffness of the crown block 3 is inhibited, and running performance (rough terrain running-through performance) is thus stabilized in rough terrain. In the present embodiment of the invention, the crown sipe 18 linearly extends. The crown sipe 18 may extend, for example, in a wavy or zigzag manner.

An angle θ2 of the crown sipe 18 relative to the tire axial direction is preferably equal to the angle θ1 of the crown toe-side edge 10A. Thus, an edge effect is enhanced, and rough terrain running-through performance becomes excellent. The term "equal" means that an absolute value |θ2-θ1| of a difference between the angle θ2 of the crown sipe 18 and the angle θ1 of the crown toe-side edge 10A is 0°, and also means the absolute value is not greater than 10°.

In order to effectively exhibit the above-described effect, a length L1 of the crown sipe 18 in the tire axial direction is preferably not less than 5% of the maximum width Wc of the crown block 3 in the tire axial direction and more preferably not less than 10% thereof, and preferably not greater than 20% thereof and more preferably not greater than 15% thereof.

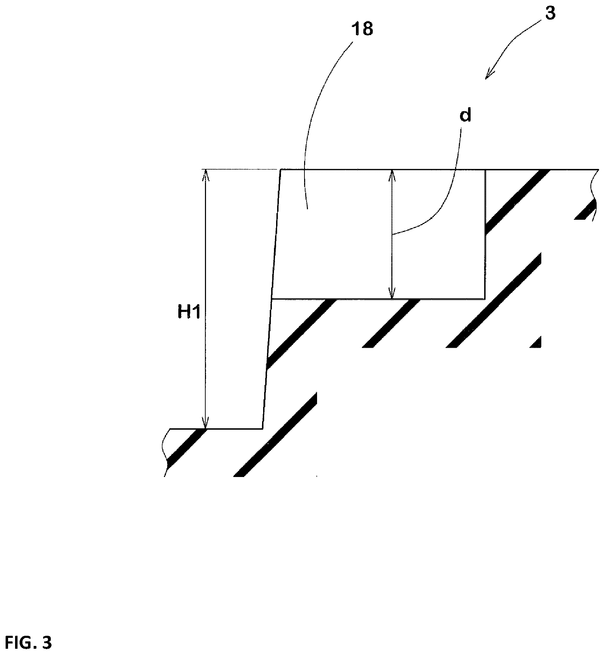

FIG. 3 is a cross-sectional view taken along a line A-A in FIG. 2. As shown in FIG. 3, a depth d of the crown sipe 18 is preferably not less than 30% of a block height H1 of the crown block 3 and more preferably not less than 40% thereof, and preferably not greater than 70% thereof and more preferably not greater than 60% thereof.

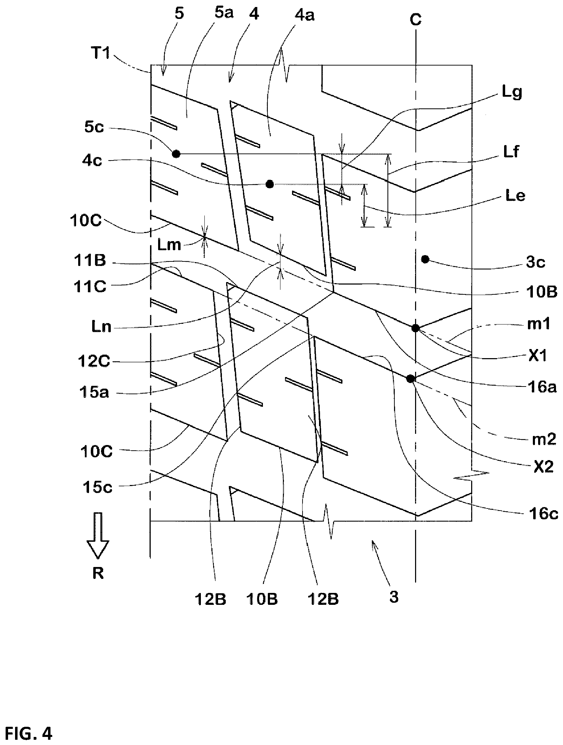

FIG. 4 is an enlarged view of FIG. 1. FIG. 4 shows the crown blocks 3, and the middle blocks 4 and the shoulder blocks 5 on the first tread end T1 side. As shown in FIG. 4, a centroid 4c of a tread surface 4a of each of the plurality of middle blocks 4 and a centroid 5c of a tread surface 5a of each of the plurality of shoulder blocks 5 are each distanced from the centroid 3c of a corresponding one of the plurality of the crown blocks 3 over a certain distance in the tire circumferential direction. Thus, a portion at which impact sound between the crown block 3 and a road surface is high, and a portion at which impact sound between the middle block 4 and the shoulder block 5, and the road surface is high, are shifted in the tire circumferential direction, thereby further reducing tire noise.

A distance Le in the tire circumferential direction between the centroid 4c of the middle block 4 and the centroid 3c of the crown block 3 is, but is not particularly limited to, preferably not less than 5.0 mm and more preferably not less than 7.0 mm, and preferably not greater than 15.0 mm and more preferably not greater than 13.0 mm. From the same viewpoint, a distance Lf in the tire circumferential direction between the centroid 5c of the shoulder block 5 and the centroid 3c of the crown block 3 is preferably not less than 5.0 mm and more preferably not less than 7.0 mm, and preferably not greater than 15.0 mm and more preferably not greater than 13.0 mm.

In the present embodiment of the invention, the centroid 5c of the shoulder block 5 is distanced from the centroid 4c of the middle block 4 over a certain distance in the tire circumferential direction. For example, the centroid 5c of the shoulder block 5 is disposed closer to the heel side in the tire rotation direction R than the centroid 4c of the middle block 4 is. A distance Lg in the tire circumferential direction between the centroid 4c of the middle block 4 and the centroid 5c of the shoulder block 5 is, but is not particularly limited to, preferably not less than 2.0 mm and more preferably not less than 3.0 mm, and preferably not greater than 5.0 mm and more preferably not greater than 4.0 mm.

In the present embodiment of the invention, each of the plurality of the middle blocks 4 and each of the plurality of the shoulder blocks 5 include a middle toe-side edge 10B and a shoulder toe-side edge 10C, respectively, disposed on the toe side in the tire rotation direction R. Each of the middle blocks 4 includes, for example, a middle heel-side edge 11B disposed on the heel side in the tire rotation direction R, and a pair of middle lateral edges 12B connecting between both ends of the middle toe-side edge 10B and both ends of the middle heel-side edge 11B. Furthermore, each of the shoulder blocks 5 includes, for example, a shoulder heel-side edge 11C disposed on the heel side in the tire rotation direction R, and a shoulder lateral edge 12C connecting between an inner end of the shoulder toe-side edge 10C and an inner end of the shoulder heel-side edge 11C.

The shoulder toe-side edge 10C, and the first edge portion 16a or the second edge portion 16b are positioned on a first imaginary straight line m1. FIG. 4 shows the shoulder toe-side edge 10C and the first edge portion 16a that are positioned on the first imaginary straight line m1. FIG. 1 shows the shoulder toe-side edge 10C and the second edge portion 16b that are positioned on the first imaginary straight line m1. The first imaginary straight line m1 is a straight line that passes through the first connection position X1 and the first outer end 15a or passes through the first connection position X1 and the second outer end 15b. The phrase "positioned on the first imaginary straight line m1" means that the first imaginary straight line m1 and the shoulder toe-side edge 10C overlap each other. Furthermore, the phrase "positioned on the first imaginary straight line m1" also implies a state where a maximum distance Lm over which the first imaginary straight line m1 and the shoulder toe-side edge 10C are distant from each other in the tire circumferential direction is not greater than 2 mm. In the present embodiment of the invention, the shoulder toe-side edge 10C overlaps the first imaginary straight line m1.

In the present embodiment of the invention, the middle toe-side edge 10B is disposed closer to the heel side in the tire rotation direction R than the first imaginary straight line m1 is. Thus, air resonance sound between the middle blocks 4 is reduced at the middle toe-side edge 10B, thereby reducing tire noise. The middle toe-side edge 10B is, for example, disposed so as not to come into contact with or intersect the first imaginary straight line m1. Thus, the above-described effect is more effectively exhibited. A minimum distance Ln over which the middle toe-side edge 10B and the first imaginary straight line m1 are distant from each other in the tire circumferential direction is, but is not particularly limited to, preferably not less than 1.0 mm and more preferably not less than 2.0 mm, and preferably not greater than 10.0 mm and more preferably not greater than 5.0 mm.

The shoulder heel-side edge 11C, and the third edge portion 16c or the fourth edge portion 16d are positioned on a second imaginary straight line m2. FIG. 4 shows the shoulder heel-side edge 11C and the third edge portion 16c that are positioned on the second imaginary straight line m2. FIG. 1 shows the shoulder heel-side edge 11C and the fourth edge portion 16d that are positioned on the second imaginary straight line m2. The second imaginary straight line m2 is a straight line that passes through the second connection position X2 and the third outer end 15c or passes through the second connection position X2 and the fourth outer end 15d. The "positioned on the second imaginary straight line m2" is defined similarly to the "positioned on the first imaginary straight line m1".

In the present embodiment of the invention, the middle heel-side edge 11B is disposed closer to the heel side in the tire rotation direction R than the second imaginary straight line m2 is. Thus, air resonance sound between the middle blocks 4 is reduced at the middle heel-side edge 11B, thereby further reducing tire noise.

In the present embodiment of the invention, the middle toe-side edge 10B, the shoulder toe-side edge 10C, the middle heel-side edge 11B, and the shoulder heel-side edge 11C linearly extend outwardly in the tire axial direction toward the heel side in the tire rotation direction R. For example, the middle lateral edge 12B and the shoulder lateral edge 12C linearly extend outwardly in the tire axial direction toward the heel side in the tire rotation direction R.

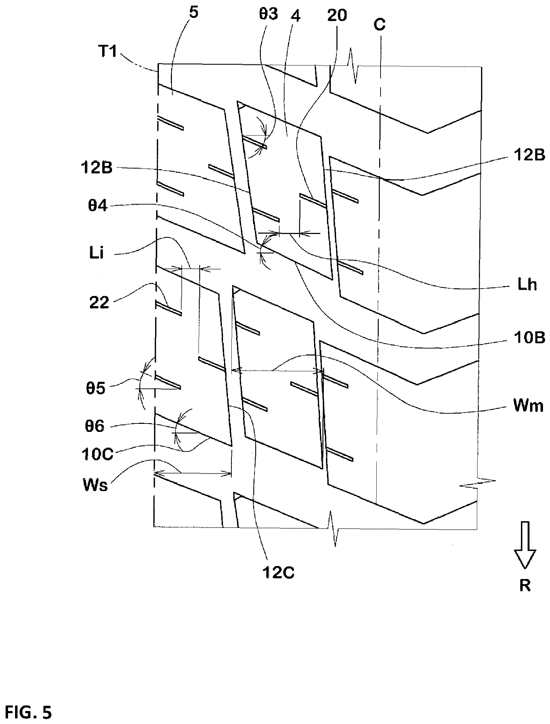

FIG. 5 is an enlarged view of FIG. 1. As shown in FIG. 5, the plurality of the middle blocks 4 each have a middle sipe 20 extending in the tire axial direction.

The middle sipe 20 is formed as a semi-open sipe that extends from the middle lateral edge 12B to the inner side of the middle block 4, and terminates in the middle block 4 without extending across the middle block 4. In the present embodiment of the invention, the middle sipe 20 linearly extends. The middle sipe 20 may extend, for example, in a wavy or zigzag manner. The middle sipe 20 is disposed in each of the pair of middle lateral edges 12B.

An angle θ3 of the middle sipe 20 relative to the tire axial direction is preferably equal to an angle θ4 of the middle toe-side edge 10B relative to the tire axial direction. Thus, rough terrain running-through performance can be further enhanced. The term "equal" means that an absolute value |θ3-θ4| of a difference between the angle θ3 of the middle sipe 20 and the angle θ4 of the middle toe-side edge 10B is not greater than 10°.

A distance Lh in the tire axial direction between the middle sipes 20 distanced from each other in the tire axial direction is, for example, preferably not less than 10% of a maximum width Wm of the middle block 4 in the tire axial direction and more preferably not less than 15% thereof, and preferably not greater than 30% thereof and more preferably not greater than 25% thereof.

In the present embodiment of the invention, the plurality of the shoulder blocks 5 each have a shoulder sipe 22 extending in the tire axial direction.

The shoulder sipe 22 is formed as a semi-open sipe that extends from the shoulder lateral edge 12C, the first tread end T1, or the second tread end T2 to the inner side of the shoulder block 5, and terminates in the shoulder block 5. In the present embodiment of the invention, the shoulder sipe 22 linearly extends. The shoulder sipe 22 may extend, for example, in a wavy or zigzag manner.

An angle θ5 of the shoulder sipe 22 relative to the tire axial direction is preferably equal to an angle θ6 of the shoulder toe-side edge 10C relative to the tire axial direction. Thus, rough terrain running-through performance is enhanced. The term "equal" means that an absolute value |θ5-θ6| of a difference between the angle θ5 of the shoulder sipe 22 and the angle θ6 of the shoulder toe-side edge 10C is not greater than 10°.

A distance Li in the tire axial direction between the shoulder sipes 22 distanced from each other in the tire axial direction is, for example, preferably not less than 5% of a maximum width Ws of the shoulder block 5 and more preferably not less than 10% thereof, and preferably not greater than 25% thereof and more preferably not greater than 20% thereof.

Although the particularly preferred embodiment of the present invention has been described above in detail, the present invention is not limited to the above-described embodiment, and various modifications can be made to implement the invention within the scope of the appended claims.

### Examples

A motorcycle rear wheel tire and a motorcycle front wheel tire each having the tread pattern shown in FIG. 1 were produced as test tires according to the specifications in Table 1. Each test tire was tested for noise performance and rough terrain running-through performance. Specifications common to the test tires were as follows.
Tire size
   Front wheel: 120/70R17
   Rear wheel: 160/60R17
Rim size
   Front wheel: 3.50×17
   Rear wheel: 4.50x 17
Tire internal pressure
   Front wheel: 250 kPa
   Rear wheel: 250 kPa
The test methods were as follows.

### <Noise performance>

The test was performed in accordance with an actual vehicle coasting test specified in ASO/C/606. Pass-by noise (maximum level dB(a)) was measured by a stationary microphone when the test vehicle was coasted under the following conditions. The results are each indicated as an index with the index of comparative example 1 being 100. The less the value is, the less tire noise is and the better the noise performance is.
Test vehicle: motorcycle having engine displacement of 500 cc
Road on which the test vehicle ran: dry asphalt road surface
Coasting distance: 50 m
Passing speed: 60 km/h
Position of stationary microphone: position that was distant laterally from the travel center line over 7.5 m and was 1.2 m high from the road surface

### <Rough terrain running-through performance>

A test rider drove the test vehicle on rough terrain. At this time, the test rider made a sensory evaluation for stability. The results are each indicated as a score with the score of comparative example 1 being 100. The greater the value is, the more excellent rough terrain running-through performance is.

Table 1 indicates the test results.

In Table 1, "A" indicates that the centroid of the crown block was distant from the tire equator, and

"B" indicates that the centroid of the crown block was on the tire equator.

In Table 1, "C" indicates that the centroid of the middle block and the centroid of the shoulder block, and the centroid of the crown block were shifted from each other in the tire circumferential direction, and "D" indicates that the centroid of the middle block and the centroid of the shoulder block, and the centroid of the crown block were not shifted from each other in the tire circumferential direction.

**[Table 1]**

| | Comp. Ex. 1 | Comp. Ex. 2 | Ex. 1 | Ex. 2 | Ex. 3 |
|---|---|---|---|---|---|
| Kinds of distances over which crown blocks were distanced | 1 | 1 | 2 | 3 | 3 |
| Position of centroid of crown block (A or B) | B | B | A | A | A |
| Position of centroid of middle block (C or D) | D | D | D | D | C |
| Position of centroid of shoulder block (C or D) | D | D | D | D | C |
| θ1 (°) | 0 | 10 | 20 | 20 | 20 |
| Presence or absence of crown sipe | Absent | Absent | Absent | Absent | Present |
| Noise performance [Index, the less the value is, the better the noise performance is] | 100 | 90 | 80 | 70 | 65 |
| Rough terrain running-through performance [Score, the greater the value is, the better the performance is] | 100 | 100 | 100 | 100 | 100 |

The test results indicate that tire noise was low in the tires of the examples, and further indicate that the tires of the examples had excellent rough terrain running-through performance.

## Claims

1. A motorcycle tire (1) comprising
a tread portion (2), wherein
the tread portion (2) has, on a tire equator (C), a crown block array (3R) in which a plurality of crown blocks (3) are aligned in a tire circumferential direction,
distances in the tire circumferential direction over which the crown blocks (3) adjacent to each other in the tire circumferential direction are distant from each other include a first distance (La1), and
a centroid (3c) of a tread surface (3a) of each of the plurality of crown blocks (3) is positioned so as to be distant from the tire equator (C) by a distance (Lb) in a tire axial direction,
**characterized in that**
distances in the tire circumferential direction over which the crown blocks (3) adjacent to each other in the tire circumferential direction are distant from each other include a second distance (La2) different from the first distance (La1).

2. The motorcycle tire (1) according to claim 1, wherein the distance (Lb) between the tire equator (C) and the centroid (3c) of each crown block (3) is 1.0 to 15.0 mm.

3. The motorcycle tire (1) according to claim 1 or 2, wherein
the tread portion (2) includes a first tread end (T1) and a second tread end (T2), and
the crown blocks (3) include a plurality of first crown blocks (3A) each having the centroid (3c) disposed on the first tread end (T1) side relative to the tire equator (C), and a plurality of second crown blocks (3B) each having the centroid (3c) disposed on the second tread end (T2) side relative to the tire equator (C).

4. The motorcycle tire (1) according to claim 3, wherein the first crown blocks (3A) and the second crown blocks (3B) alternate in the tire circumferential direction.

5. The motorcycle tire (1) according to any one of claims 1 to 4, wherein
the tread portion (2) includes a pair of middle block arrays (4R) each of which is disposed outward of the crown blocks (3) in the tire axial direction and has a plurality of middle blocks (4) aligned in the tire circumferential direction, and includes a pair of shoulder block arrays (5R) each of which is disposed outward of the middle blocks (4) in the tire axial direction and has a plurality of shoulder blocks (5) aligned in the tire circumferential direction, and
a centroid (4c) of a tread surface (4a) of each of the plurality of middle blocks (4) and a centroid (5c) of a tread surface (5a) of each of the plurality of shoulder blocks (5) are each distanced from the centroid (3c) of the tread surface (3a) of a corresponding one of the plurality of crown blocks (3) by a distance in the tire circumferential direction.

6. The motorcycle tire (1) according to claim 5, wherein the distance (Le) in the tire circumferential direction between the centroid (4c) of the tread surface (4a) of each of the plurality of middle blocks (4) and the centroid (3c) of the tread surface (3a) of a corresponding one of the plurality of crown blocks (3) is 5.0 to 15.0 mm.

7. The motorcycle tire (1) according to claim 5 or 6, wherein the distance (Lf) in the tire circumferential direction between the centroid (5c) of the tread surface (5a) of each of the plurality of shoulder blocks (5) and the centroid (3c) of the tread surface (3a) of a corresponding one of the plurality of crown blocks (3) is 5.0 to 15.0 mm.

8. The motorcycle tire (1) according to any one of claims 1 to 7, wherein
the tread portion (2) has a designated tire rotation direction (R),
the plurality of crown blocks (3) each include a crown toe-side edge (10A) disposed on a toe side in the tire rotation direction (R), and
the crown toe-side edge (10A) is inclined relative to the tire axial direction.

9. The motorcycle tire (1) according to claim 8, wherein an angle (θ1) of the crown toe-side edge (10A) relative to the tire axial direction is 10 to 45°.

10. The motorcycle tire (1) according to claim 8 or 9, wherein
the crown toe-side edge (10A) extends from a first outer end (15a) to a second outer end (15b) in the tire axial direction so as to be V-shaped,
the crown toe-side edge (10A) includes a first edge portion (16a) that linearly extends from the first outer end (15a) toward the tire equator (C), and a second edge portion (16b) that linearly extends from the second outer end (15b) toward the tire equator (C), and
the first edge portion (16a) and the second edge portion (16b) connect to each other at a position (X1) distant from the tire equator (C) by a distance (Lc) in the tire axial direction.

11. The motorcycle tire (1) according to claim 10, wherein
the tread portion (2) includes a pair of middle block arrays (4R) each of which is disposed outward of the crown blocks (3) in the tire axial direction and has a plurality of middle blocks (4) aligned in the tire circumferential direction, and includes a pair of shoulder block arrays (5R) each of which is disposed outward of the middle blocks (4) in the tire axial direction and has a plurality of shoulder blocks (5) aligned in the tire circumferential direction,
each of the plurality of middle blocks (4) and each of the plurality of shoulder blocks (5) include a middle toe-side edge (10B) and a shoulder toe-side edge (10C), respectively, disposed on a toe side in the tire rotation direction (R),
the first edge portion (16a) or the second edge portion (16b), and the shoulder toe-side edge (10C) are positioned on a first imaginary straight line (m1), and
the middle toe-side edge (10B) is disposed closer to a heel side in tire rotation direction (R) than the first imaginary straight line (m1) is.

12. The motorcycle tire (1) according to any one of claims 1 to 11, wherein
the plurality of crown blocks (3) each have a crown sipe (18) extending in the tire axial direction, and
a depth (d) of the crown sipe (18) is 30% to 70% of a block height (H1) of each crown block (3).

13. The motorcycle tire (1) according to claim 12, wherein a length (L1) of the crown sipe (18) in the tire axial direction is 5% to 20% of a maximum length (Wc) of each crown block (3) in the tire axial direction.

## Patentansprüche

1. Motorradreifen (1), umfassend
einen Laufflächenabschnitt (2), wobei
der Laufflächenabschnitt (2) auf einem Reifenäquator (C) eine Kronenblockanordnung (3R) aufweist, in der eine Vielzahl von Kronenblöcken (3) in einer Reifenumfangsrichtung ausgerichtet sind,
Abstände in der Reifenumfangsrichtung, über die die Kronenblöcke (3), die einander in der Reifenumfangsrichtung benachbart sind, voneinander beabstandet sind, einen ersten Abstand (La1) umfassen, und
ein Schwerpunkt (3c) einer Laufflächen-Oberfläche (3a) von jedem der Vielzahl von Kronenblöcken (3) so positioniert ist, dass er von dem Reifenäquator (C) einen Abstand (Lb) in einer Reifenaxialrichtung beabstandet ist,
**dadurch gekennzeichnet, dass**
Abstände in der Reifenumfangsrichtung, über die die Kronenblöcke (3), die einander in der Reifenumfangsrichtung benachbart sind, voneinander beabstandet sind, einen zweiten Abstand (La2) umfassen, der sich von dem ersten Abstand (La1) unterscheidet.

2. Motorradreifen (1) nach Anspruch 1, wobei der Abstand (Lb) zwischen dem Reifenäquator (C) und dem Schwerpunkt (3c) jedes Kronenblocks (3) 1,0 bis 15,0 mm beträgt.

3. Motorradreifen (1) nach Anspruch 1 oder 2, wobei
der Laufflächenabschnitt (2) ein erstes Laufflächenende (T1) und ein zweites Laufflächenende (T2) umfasst, und
die Kronenblöcke (3) eine Vielzahl von ersten Kronenblöcken (3A), deren jeweiliger Schwerpunkt (3c) auf der Seite des ersten Laufflächenendes (T1) relativ zu dem Reifenäquator (C) angeordnet ist, und eine Vielzahl von zweiten Kronenblöcken (3B) umfassen, deren jeweiliger Schwerpunkt (3c) auf der Seite des zweiten Laufflächenendes (T2) relativ zu dem Reifenäquator (C) angeordnet ist.

4. Motorradreifen (1) nach Anspruch 3, wobei sich die ersten Kronenblöcke (3A) und die zweiten Kronenblöcke (3B) in der Reifenumfangsrichtung abwechseln.

5. Motorradreifen (1) nach einem der Ansprüche 1 bis 4, wobei
der Laufflächenabschnitt (2) ein Paar Mittelblockanordnungen (4R) umfasst, von denen jede außen von den Kronenblöcken (3) in der Reifenaxialrichtung angeordnet ist und eine Vielzahl von Mittelblöcken (4) aufweist, die in der Reifenumfangsrichtung ausgerichtet sind, und ein Paar Schulterblockanordnungen (5R) umfasst, von denen jede außen von den Mittelblöcken (4) in der Reifenaxialrichtung angeordnet ist und eine Vielzahl von Schulterblöcken (5) aufweist, die in der Reifenumfangsrichtung ausgerichtet sind, und
ein Schwerpunkt (4c) einer Laufflächen-Oberfläche (4a) von jedem der Vielzahl von Mittelblöcken (4) und ein Schwerpunkt (5c) einer Laufflächen-Oberfläche (5a) von jedem der Vielzahl von Schulterblöcken (5) jeweils von dem Schwerpunkt (3c) der Laufflächen-Oberfläche (3a) eines entsprechenden der Vielzahl von Kronenblöcken (3) einen Abstand in der Reifenumfangsrichtung beabstandet sind.

6. Motorradreifen (1) nach Anspruch 5, wobei der Abstand (Le) in der Reifenumfangsrichtung zwischen dem Schwerpunkt (4c) der Laufflächen-Oberfläche (4a) von jedem der Vielzahl von Mittelblöcken (4) und dem Schwerpunkt (3c) der Laufflächen-Oberfläche (3a) eines entsprechenden der Vielzahl von Kronenblöcken (3) 5,0 bis 15,0 mm beträgt.

7. Motorradreifen (1) nach Anspruch 5 oder 6, wobei der Abstand (Lf) in der Reifenumfangsrichtung zwischen dem Schwerpunkt (5c) der Laufflächen-Oberfläche (5a) von jedem der Vielzahl von Schulterblöcken (5) und dem Schwerpunkt (3c) der Laufflächen-Oberfläche (3a) eines entsprechenden der Vielzahl von Kronenblöcken (3) 5,0 bis 15,0 mm beträgt.

8. Motorradreifen (1) nach einem der Ansprüche 1 bis 7, wobei
der Laufflächenabschnitt (2) eine bestimmte Reifendrehrichtung (R) aufweist,
die Vielzahl von Kronenblöcken (3) jeweils eine kronenzehenseitige Kante (10A) umfassen, die auf einer Zehenseite in der Reifendrehrichtung (R) angeordnet ist, und
die kronenzehenseitige Kante (10A) relativ zu der Reifenaxialrichtung geneigt ist.

9. Motorradreifen (1) nach Anspruch 8, wobei ein Winkel (θ1) der kronenzehenseitigen Kante (10A) relativ zu der Reifenaxialrichtung 10 bis 45° beträgt.

10. Motorradreifen (1) nach Anspruch 8 oder 9, wobei
die kronenzehenseitige Kante (10A) sich von einem ersten äußeren Ende (15a) zu einem zweiten äußeren Ende (15b) in der Reifenaxialrichtung so erstreckt, dass sie V-förmig ist,
die kronenzehenseitige Kante (10A) einen ersten Kantenabschnitt (16a), der sich linear von dem ersten äußeren Ende (15a) zu dem Reifenäquator (C) hin erstreckt, und einen zweiten Kantenabschnitt (16b), der sich linear von dem zweiten äußeren Ende (15b) zu dem Reifenäquator (C) hin erstreckt, umfasst, und
der erste Kantenabschnitt (16a) und der zweite Kantenabschnitt (16b) an einer Position (X1), die von dem Reifenäquator (C) einen Abstand (Lc) in der Reifenaxialrichtung beabstandet ist, miteinander verbunden sind.

11. Motorradreifen (1) nach Anspruch 10, wobei
der Laufflächenabschnitt (2) ein Paar Mittelblockanordnungen (4R) umfasst, von denen jede außen von den Kronenblöcken (3) in der Reifenaxialrichtung angeordnet ist und eine Vielzahl von Mittelblöcken (4) aufweist, die in der Reifenumfangsrichtung ausgerichtet sind, und ein Paar Schulterblockanordnungen (5R) umfasst, von denen jede außen von den Mittelblöcken (4) in der Reifenaxialrichtung angeordnet ist und eine Vielzahl von Schulterblöcken (5) aufweist, die in der Reifenumfangsrichtung ausgerichtet sind,
jeder der Vielzahl von Mittelblöcken (4) und jeder der Vielzahl von Schulterblöcken (5) jeweils eine mittlere zehenseitige Kante (10B) und eine schulterzehenseitige Kante (10C) umfassen, die auf einer Zehenseite in der Reifendrehrichtung (R) angeordnet sind,
der erste Kantenabschnitt (16a) oder der zweite Kantenabschnitt (16b) und die schulterzehenseitige Kante (10C) auf einer ersten imaginären geraden Linie (m1) positioniert sind, und
die mittlere zehenseitige Kante (10B) näher bei einer Fersenseite in der Reifendrehrichtung (R) angeordnet ist als die erste imaginäre gerade Linie (m1).

12. Motorradreifen (1) nach einem der Ansprüche 1 bis 11, wobei
die Vielzahl von Kronenblöcken (3) jeweils einen Kronenfeinschnitt (18) aufweisen, der sich in der Reifenaxialrichtung erstreckt, und
eine Tiefe (d) des Kronenfeinschnitts (18) 30 % bis 70 % einer Blockhöhe (H1) jedes Kronenblocks (3) beträgt.

13. Motorradreifen (1) nach Anspruch 12, wobei eine Länge (L1) des Kronenfeinschnitts (18) in der Reifenaxialrichtung 5 % bis 20 % einer maximalen Länge (Wc) jedes Kronenblocks (3) in der Reifenaxialrichtung beträgt.

## Revendications

1. Pneumatique pour motocyclette (1) comprenant
une portion formant bande de roulement (2), dans lequel la portion formant bande de roulement (2) a, sur un équateur de pneumatique (C), un agencement de blocs de couronne (3R) dans lequel une pluralité de blocs de couronne (3) sont alignés dans une direction circonférentielle du pneumatique,
des distances dans la direction circonférentielle du pneumatique à raison desquelles les blocs de couronne (3) adjacents les uns aux autres dans la direction circonférentielle du pneumatique sont distants les uns des autres incluent une première distance (La1), et
un barycentre (3c) d'une surface de bande de roulement (3a) de chacun de la pluralité de blocs de couronne (3) est positionné de manière à être distant de l'équateur de pneumatique (C) à raison d'une distance (Lb) dans une direction axiale du pneumatique,
**caractérisé en ce que**
des distances dans la direction circonférentielle du pneumatique à raison desquelles les blocs de couronne (3) adjacents les uns aux autres dans la direction circonférentielle du pneumatique sont distants les uns des autres incluent une seconde distance (La2) différente de la première distance (La1).

2. Pneumatique pour motocyclette (1) selon la revendication 1, dans lequel la distance (Lb) entre l'équateur de pneumatique (C) et le barycentre (3c) de chaque bloc de couronne (3) est de 1,0 à 15,0 mm.

3. Pneumatique pour motocyclette (1) selon la revendication 1 ou 2, dans lequel
la portion formant bande de roulement (2) inclut une première extrémité de bande de roulement (T1) et une seconde extrémité de bande de roulement (T2), et
les blocs de couronne (3) incluent une pluralité de premiers blocs de couronne (3A) ayant chacun le barycentre (3c) disposé sur le côté de la première extrémité de bande de roulement (T1) relativement à l'équateur de pneumatique (C), et une pluralité de seconds blocs de couronne (3B) ayant chacun le barycentre (3c) disposé sur le second côté de l'extrémité de bande de roulement (T2) relativement à l'équateur de pneumatique (C).

4. Pneumatique pour motocyclette (1) selon la revendication 3, dans lequel les premiers blocs de couronne (3A) et les seconds blocs de couronne (3B) sont alternés dans la direction circonférentielle du pneumatique.

5. Pneumatique pour motocyclette (1) selon l'une quelconque des revendications 1 à 4, dans lequel
la portion formant bande de roulement (2) inclut une paire d'agencements de blocs médians (4R) dont chacun est disposé à l'extérieur des blocs de couronne (3) dans la direction axiale du pneumatique et a une pluralité de blocs médians (4) alignés dans la direction circonférentielle du pneumatique, et inclut une paire d'agencements de blocs d'épaulement (5R) dont chacun est disposé à l'extérieur des blocs médians (4) dans la direction axiale du pneumatique et a une pluralité de blocs d'épaulement (5) alignés dans la direction circonférentielle du pneumatique, et
un barycentre (4c) d'une surface de bande de roulement (4a) de chacun de la pluralité de blocs médians (4) et un barycentre (5c) d'une surface de bande de roulement (5a) de chacun de la pluralité de blocs d'épaulement (5) sont chacun à distance du barycentre (3c) de la surface de bande de roulement (3a) d'un bloc correspondant parmi la pluralité de blocs de couronne (3) à raison d'une distance dans la direction circonférentielle du pneumatique.

6. Pneumatique pour motocyclette (1) selon la revendication 5, dans lequel la distance (Le) dans la direction circonférentielle du pneumatique entre le barycentre (4c) de la surface de bande de roulement (4a) de chacun de la pluralité de blocs médians (4) et le barycentre (3c) de la surface de bande de roulement (3a) d'un bloc correspondant parmi la pluralité de blocs de couronne (3) est de 5,0 à 15,0 mm.

7. Pneumatique pour motocyclette (1) selon la revendication 5 ou 6, dans lequel la distance (Lf) dans la direction circonférentielle du pneumatique entre le barycentre (5c) de la surface de bande de roulement (5a) de chacun de la pluralité de blocs d'épaulement (5) et le barycentre (3c) de la surface de bande de roulement (3a) d'un bloc correspondant parmi la pluralité de blocs de couronne (3) est de 5,0 à 15,0 mm.

8. Pneumatique pour motocyclette (1) selon l'une quelconque des revendications 1 à 7, dans lequel
la portion formant bande de roulement (2) a une direction de rotation du pneumatique (R) par conception,
la pluralité de blocs de couronne (3) incluent chacun un bord côté pointe de couronne (10A) disposé sur un côté pointe dans la direction de rotation du pneumatique (R), et
le bord côté pointe de couronne (10A) est incliné relativement à la direction axiale du pneumatique.

9. Pneumatique pour motocyclette (1) selon la revendication 8, dans lequel un angle (θ1) du bord côté pointe de couronne (10A) relativement à la direction axiale du pneumatique est de 10 à 45°.

10. Pneumatique pour motocyclette (1) selon la revendication 8 ou 9, dans lequel
le bord côté pointe de couronne (10A) s'étend depuis une première extrémité extérieure (15a) jusqu'à une seconde extrémité extérieure (15b) dans la direction axiale du pneumatique de manière à être en forme de V,
le bord côté pointe de couronne (10A) inclut une première portion de bord (16a) qui s'étend linéairement depuis la première extrémité extérieure (15a) vers l'équateur de pneumatique (C), et une seconde portion de bord (16b) qui s'étend linéairement depuis la seconde extrémité extérieure (15b) vers l'équateur de pneumatique (C), et
la première portion de bord (16a) et la seconde portion de bord (16b) sont connectées l'une à l'autre à une position (X1) distante de l'équateur de pneumatique (C) à raison d'une distance (Lc) dans la direction axiale du pneumatique.

11. Pneumatique pour motocyclette (1) selon la revendication 10, dans lequel
la portion formant bande de roulement (2) inclut une paire d'agencements de blocs médians (4R) dont chacun est disposé à l'extérieur des blocs de couronne (3) dans la direction axiale du pneumatique et a une pluralité de blocs médians (4) alignés dans la direction circonférentielle du pneumatique, et inclut une paire d'agencements de blocs d'épaulement (5R) dont chacun est disposé à l'extérieur des blocs médians (4) dans la direction axiale du pneumatique et a une pluralité de blocs d'épaulement (5) alignés dans la direction circonférentielle du pneumatique,
chacun de la pluralité de blocs médians (4) et chacun de la pluralité de blocs d'épaulement (5) incluent un bord côté pointe médian (10B) et un bord côté pointe d'épaulement (10C), respectivement, disposés sur un côté pointe dans la direction de rotation du pneumatique (R),
la première portion de bord (16a) ou la seconde portion de bord (16b), et le bord côté pointe d'épaulement (10C) sont positionnés sur une première ligne droite imaginaire (m1), et
le bord côté pointe médian (10B) est disposé plus proche d'un côté talon dans une direction de rotation du pneumatique (R) que ne l'est la première ligne droite imaginaire (m1)

12. Pneumatique pour motocyclette (1) selon l'une quelconque des revendications 1 à 11, dans lequel
la pluralité de blocs de couronne (3) ont chacun une fente de couronne (18) s'étendant dans la direction axiale du pneumatique, et
une profondeur (d) de la fente de couronne (18) est de 30 % à 70 % d'une hauteur de bloc (H1) de chaque bloc de couronne (3).

13. Pneumatique pour motocyclette (1) selon la revendication 12, dans lequel une longueur (L1) de la fente de couronne (18) dans la direction axiale du pneumatique est de 5 % à 20 % d'une longueur maximum (Wc) de chaque bloc de couronne (3) dans la direction axiale du pneumatique.
